# EUROPÄISCHE PATENTSCHRIFT

(11) **EP 1 266 814 B1**
(45) Veröffentlichungstag und Bekanntmachung des Hinweises auf die Patenterteilung: **13.10.2004**
(21) Anmeldenummer: 02012426.9
(22) Anmeldetag: 10.06.2002
(51) Int. Cl.: B60T 8/00

(54) **Bremssystem für Schienenfahrzeuge**
Brake system for railway vehicle
Système de freinage pour véhicule ferroviaire

(30) Priorität: 15.06.2001 DE 10128897
(43) Veröffentlichungstag der Anmeldung: 18.12.2002
(73) Patentinhaber: KNORR-BREMSE Systeme für Schienenfahrzeuge GmbH, 80809 München (DE)
(72) Erfinder: Wagner, Thomas, 81373 München (DE); Friesen, Ulf, 81739 München (DE); Becker, Gerd, 85757 Karlsfeld (DE)

(56) Entgegenhaltungen:
- EP-A- 0 958 980
- DE-A- 19 848 990
- US-A- 5 475 818
- US-A- 5 752 748

## Beschreibung

### Stand der Technik

Die Erfindung geht aus von einem Bremssystem für Schienenfahrzeuge, insbesondere von einem Bremssystem für einen aus mehreren Schienenfahrzeugen bestehenden Schienenfahrzeugverband, mit mehreren elektromechanischen Bremszuspanneinrichtungen, von welchen je eine Bremszuspanneinrichtung von wenigstens einem lokalen Bremssteuergerät angesteuert ist und mit wenigstens einem zentralen Bremssteuergerät, das mit den lokalen Bremssteuergeräten über wenigstens einen Bremsystem-Datenbus kommuniziert, nach der Gattung des Patentanspruchs 1.

Aus der EP 0 467 112 B1 ist ein Bremssystem für Straßenfahrzeuge mit zwei zentralen Bremssteuergeräten bekannt, bei welchem je ein zentrales Bremssteuergerät mit zwei radbezogenen Bremssteuergeräten mittels eines Datenbusses kommuniziert. Die Bremssteuergeräte stehen mit dem Datenbus über Knoten in Verbindung. Moderne Schienenfahrzeuge und insbesondere Schienenfahrzeugverbände weisen gegenüber Straßenfahrzeugen in der Regel eine weitaus höhere Anzahl von Bremseinheiten in Form von meist elektromechanischen Bremszuspanneinrichtungen auf, deren Bremssteuergeräte in Informationsaustausch mit dem zentralen Bremssteuergerät treten müssen. Würde man die von Straßenfahrzeugen her bekannten Kommunikationsstrukturen auf Schienenfahrzeuge übertragen, so ergäbe sich eine relativ hohe Anzahl von Teilnehmern und Knoten an einem Datenbus, der aufgrund der großen räumlichen Erstreckung eines Schienenfahrzeugverbandes außerdem eine relativ niedrige Übertragungsrate aufwiese. Gerade für Echtzeitfunktionen wie beispielsweise die Gleitschutzfunktion oder die Bremskraftregelung sind jedoch hohe Datenübertragungsraten notwendig.

Aus der DE 198 29 126 A1 ist ein elektromechanisches Bremssystem bekannt, weiches einen Pedalsimulator, ein Zentralmodul und mehrere Radbremsmodule beinhaltet. Ein redundanter Datenbus verbindet das Zentralmodul mit den Bremsmoduln. Zentralmodul und Bremsmoduln können aus mehreren, jeweils derselben Hierarchieebene zugehörigen Rechnern aufgebaut sein.

Die DE 198 48 990 A1 beschreibt ein Bremssystem für Schienenfahrzeuge, bei welchem die Ansteuerung der Bremsen jeweils über eine lokale elektronische Bremssteuereinheit erfolgt und die Bremssignale über einen zentralen Schienenfahrzeugdatenbus übertragen werden.

Der vorliegenden Erfindung liegt die Aufgabe zugrunde, ein Bremssystem für Schienenfahrzeuge der eingangs erwähnten Art derart weiter zu entwickeln, dass zumindest bereichsweise ein schneller Datenaustausch zwischen Bremssteuergeräten, Sensoren und Aktuatoren möglich ist. Darüber hinaus soll das Bremssystem eine hohe Verfügbarkeit und Ausfallsicherheit gewährleisten.

Erfindungsgemäß wird diese Aufgabe dadurch gelöst, dass wenigstens einer Gruppe von lokalen Bremssteuergeräten eines Teils des Schienenfahrzeugs oder eines Teils des Schienenfahrzeugverbandes wie beispielsweise eines Drehgestells oder eines einzelnen Wagens jeweils mindestens ein weiteres, dem zentralen Bremssteuergerät und den lokalen Bremssteuergeräten der Gruppe zwischengeschaltetes Bremssteuergerät zugeordnet ist, wobei jedes lokale Bremssteuergerät der Gruppe von lokalen Bremssteuergeräten mittels eines separaten, lokalen Bremssystem-Datenbusses mit dem zugeordneten weiteren Bremssteuergerät kommuniziert.

### Vorteile der Erfindung

Aufgrund der erfindungsgemäßen Kommunikationsstruktur mit Moduln, die jeweils eine begrenzte Anzahl von lokalen und räumlich nicht weit voneinander entfernt gelegenen Bremssteuergeräten beinhalten, die jeweils durch separate Bremssystem-Datenbusse mit einem Bremssteuergerät einer mittleren Steuerebene kommunizieren, sind innerhalb eines jeden Moduls echtzeitgerechte Datenübertragungsraten realisierbar, wie sie für schnelle Steuerungs- und Regelungsaufgaben wie beispielsweise eine Bremskraftregelung oder eine Gleitschutzregelung notwendig sind. Demgegenüber können übergeordnete, auf ein oder mehrere Schienenfahrzeuge oder auf den gesamten Schienenfahrzeugverband bezogene Bremssystem-Datenbusse hiervon entkoppelt weiterhin mit einer niedrigeren Übertragungsrate betrieben werden. Ein solches Bremssystem kann auf einfache Weise um weitere solcher Module erweitert werden, ohne dass hierfür Änderungen der Kommunikationsstruktur notwendig wären. Darüber hinaus sind den einzelnen Moduln unterschiedliche Bremsanforderungssignale zuweisbar, so dass eine individuelle Bremskraftanpassung wie beispielsweise eine für jeden Wagen eines Schienenfahrzeugverbandes lastabhängige Bremskraftanforderung auf einfache Weise realisierbar ist.

Im weiteren geht mit der sternförmigen Modulstruktur mit jeweils separaten lokalen Bremssystem-Datenbussen für jedes lokale Bremssteuergerät eine erhöhte Verfügbarkeit des Bremssystems einher, da ein Ausfall eines lokalen Bremssteuergeräts bzw. des zugeordneten lokalen Bremssystem-Datenbusses keine Auswirkungen auf die Funktion der übrigen lokalen Bremssteuergeräte bzw, deren Bremssystem-Datenbusse hat. Im weiteren würde auch ein Ausfall des den Moduln übergeordneten Bremssystem-Datenbusses bzw. des zentralen Bremssteuergeräts die Auslösung einer gleitschutzgeregelten Sicherheitsbremsung nicht verhindern, weil die Module als stand-alone-Systeme die Gleitschutzregelung unabhängig hiervon ausüben können.

Durch die in den Unteransprüchen aufgeführten Maßnahmen sind vorteilhafte Weiterbildungen und Verbesserungen der im Patentanspruch 1 angegebenen Erfindung möglich.

Besonders zu bevorzugende Maßnahmen sehen vor, dass die lokalen Bremssystem-Datenbusse CAN (Controller Area Network)-Busse sind und eine relativ hohe Übertragungsrate zur Realisierung eines Echtzeitverhaltens aufweisen, welche vorzugsweise in einem Bereich von ca. 500 bis 1000 kBits/s liegt. Hierbei beinhaltet je ein lokaler Bremssystem-Datenbus eine oder mehrere elektrische Leitungen und/oder eine oder mehrere Lichtwellenleiter.

Gemäß einer Weiterbildung ist vorgesehen, dass wenigstens ein weiteres, redundantes zentrales Steuergerät vorgesehen ist, wobei die zentralen Bremssteuergeräte durch einen globalen Bremssystem-Datenbus untereinander und mit fahrzeug- oder fahrzeugverband-bezogenen Sensoren und Aktoren kommunizieren. Durch Vorsehen eines weiteren zentralen Steuergeräts, das die Aufgaben des anderen zentralen Steuergeräts bei dessen Ausfall übernimmt, wird die Verfügbarkeit des erfindungsgemäßen Bremssystems in vorteilhafter Weise weiter gesteigert.

In bevorzugter Weise kommunizieren die zentralen Bremssteuergeräte mittels des von den lokalen Bremssystem-Datenbussen unabhängigen, globalen Bremssystem-Datenbusses mit den weiteren Bremssteuergeräten, wobei der globale Bremssystem-Datenbus einen CAN-Bus mit linearer Busstruktur beinhaltet. Durch diese Maßnahme sind in den lokalen Bremssystem-Datenbussen höhere Übertragungsraten als innerhalb des globalen Bremssystem-Datenbusses realisierbar, außerdem fördert eine derartige Entkopplung die Funktionssicherheit der in den Moduln zusammengefassten lokalen Bremssteuergeräte.

### Zeichnungen

Ein Ausführungsbeispiel der Erfindung ist in der Zeichnung dargestellt und in der nachfolgenden Beschreibung näher erläutert. In der Zeichnung zeigt die einzige Figur ein schematisches Blockschaltbild einer Kommunikationsstruktur der Bremssteuergeräte eines elektromechanischen Bremssystems für eine S-Bahn gemäß einer bevorzugten Ausführungsform.

### Beschreibung des Ausführungsbeispiels

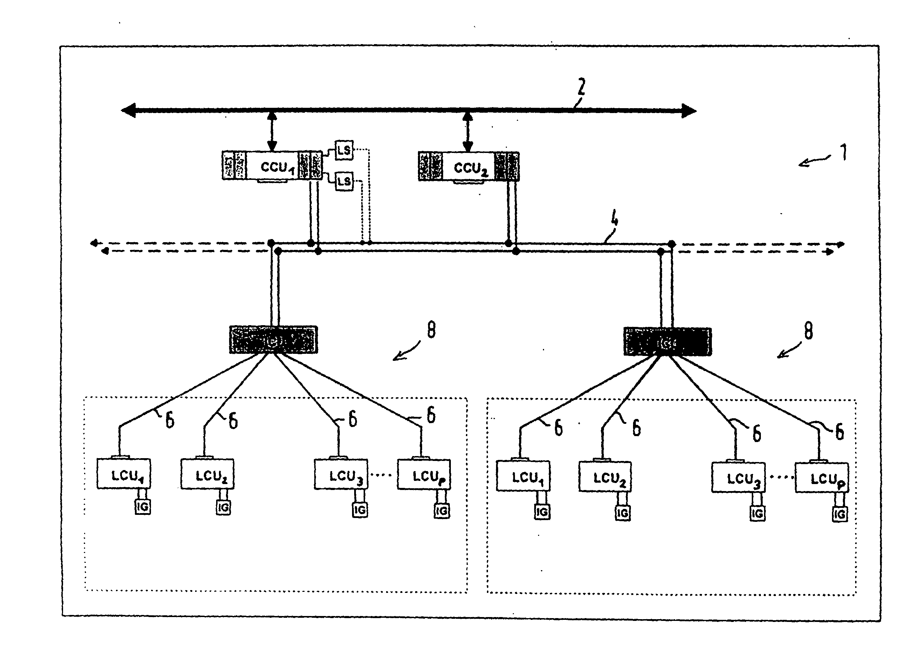

In Fig.1 ist aus Maßstabs- und Übersichtlichkeitsgründen von einem Bremssystem für eine S-Bahn lediglich die Kommunikationsstruktur 1 der Bremssteuergeräte dargestellt. Eine obere Steuerebene des Bremssystems wird durch zwei zentrale Bremssteuergeräte CCU₁ und CCU₂ gebildet, die systemübergreifend in die übrige Schienenfahrzeugelektronik eingebunden sind, indem sie von einem Schienenfahrzeug-Datenbus 2 Signale empfangen, welche für den gesamten Schienenfahrzeugverband der S-Bahn von Bedeutung sind, wie beispielsweise das Bremsanforderungssignal eines Bremswertgebers, ein Parkbremssignal oder ein Störungssignal.

Die beiden redundant vorhandenen, zentralen Bremssteuergeräte CCU₁, CCU₂ stehen über einen globalen Bremssystem-Datenbus 4 miteinander in Verbindung, so dass bei Ausfall eines der zentralen Bremssteuergeräte CCU₁, CCU₂ das jeweils andere dessen Aufgaben übernehmen kann. Außerdem kann dadurch eine gegenseitige Funktionsüberwachung erfolgen. Lastsensoren LS erfassen die momentane Last der S-Bahn und senden ein entsprechendes Signal an die zentralen Bremssteuergeräte CCU₁, CCU₂, die daraufhin die Bremsanforderung lastabhängig anpassen. Ausgangsgrößen der beiden zentralen Bremssteuergeräte CCU₁, CCU₂ sind unter anderem Bremskraftsollwerte für mehrere an den globalen Bremssystem-Datenbus 4 angeschlossene Bremssteuergeräte ICU₁, ICU₂ einer mittleren Steuerebene. Der globale Bremssystem-Datenbus 4 stellt daher die Kommunikation zwischen den zentralen Bremssteuergeräten CCU₁, CCU₂ der oberen Steuerebene und den Bremssteuergeräten ICU₁, ICU₂ der mittleren Steuerebene sicher.

Der globale Bremssystem-Datenbus 4 ist vorzugsweise als CAN-Bus mit linearer Busstruktur ausgebildet, d.h. die zentralen Bremssteuergeräte CCU₁, CCU₂ der oberen Steuerebene und die Bremssteuergeräte ICU₁, ICU₂ der mittleren Steuerebene sind in nebengeordneter Weise an den globalen Bremssystem-Datenbus 4 angeschlossen, ohne dass der Ausfall eines Teilnehmers die Verfügbarkeit der anderen Teilnehmer beeinflusst. Der globale Bremssystem-Datenbus 4 ist darauf ausgelegt, die Kommunikation innerhalb eines großen Schienenfahrzeugverbandes zu ermöglichen und wird vorzugsweise mit einer relativ niedrigen Übertragungsrate von ca.
125 kBits/s betrieben, um eine zuverlässige Datenübertragung auch bei einer maximalen Buslänge von ca. 250 m noch gewährleisten zu können. Um die Verfügbarkeit zu erhöhen, kann auch der globale Bremssystem-Datenbus 4 redundant ausgeführt sein. Zusätzlich zu den beiden zentralen Bremssteuergeräten CCU₁, CCU₂ können auf dem globalen Bremssystem-Datenbus 4 weitere Geräte wie Steuerungen, Sensoren, Aktuatoren angeschlossen werden, welche im Schienenfahrzeugverband verteilt sind.

Auf einer unteren Steuerebene dienen lokale Bremssteuergeräte LCU₁..LCUₚ zur Ansteuerung von Bremsaktuatoren umfassenden, elektromechanischen Bremszuspanneinrichtungen, wobei jeweils ein lokales Bremssteuergerät LCUᵢ einer Bremszuspanneinrichtung zugeordnet ist. Hierbei sind erfindungsgemäß die lokalen Bremssteuergeräten LCU₁..LCUₚ eines Teils eines Schienenfahrzeugs, eines Schienenfahrzeugs oder eines Teils des Schienenfahrzeugverbandes wie beispielsweise eines Drehgestells oder eines einzelnen Wagens der S-Bahn jeweils zu einer Gruppe zusammengefasst, wobei jedes lokale Bremssteuergerät LCUᵢ einer Gruppe über einen separaten, lokalen Bremssystem-Datenbus 6 mit dem der betreffenden Gruppe zugeordneten Bremssteuergerät ICUᵢ der mittleren Steuerebene kommunizierend in Verbindung steht. Die lokalen Bremssteuergeräte LCU₁..LCUₚ einer solchen Gruppe tauschen somit in einer sternförmigen Struktur mit dem zugeordneten Bremssteuergerät ICUᵢ der mittleren Steuerebene Daten aus und sind an dieses jeweils mittels einer "Punkt-zu-Punkt-Verbindung" angeschlossen. Die Bremssteuergeräte ICU₁, ICU₂ der mittleren Steuerebene stellen dabei Datenverteiler bzw. Datenfilter für die ihnen jeweils zugeordnete Gruppe von lokalen Bremsteuergeräten LCU₁..LCUₚ dar. Beispielsweise kann es aufgrund einer lastabhängigen Bremsanforderung erforderlich sein, einem oder mehreren lokalen Bremssteuergeräten LCU₁..LCUₚ innerhalb einer Gruppe andere Bremskraftsollwerte zuzuweisen als den restlichen lokalen Bremssteuergeräten LCU₁..LCUₚ der Gruppe. Darüber hinaus kann beispielsweise auch ein Bremswertabgleich aufgrund unterschiedlicher Erwärmung der Bremsaktuatoren innerhalb einer Gruppe notwendig sein.

Wesentlich ist jedoch, dass in den lokalen Bremssystem-Datenbussen 6 höhere Daten-Übertragungsraten möglich sind als innerhalb des globalen, sich räumlich wesentlich weiter erstreckenden Bremssystem-Datenbusses 4, so dass innerhalb eines durch ein Bremssteuergerät ICUᵢ der mittleren Steuerebene und die ihm zugeordneten lokalen Bremssteuergeräte LCU₁..LCUₚ gebildeten Moduls 8 schnelle Steuerungs- und Regelungsfunktionen wie beispielsweise eine Gleit- oder Schlupfregelung und/oder eine Bremskraftregelung realisiert werden können. Solche Regelfunktionen können in den Bremssteuergeräten ICU₁, ICU₂ der mittleren Steuerebene und/oder in den lokalen Bremssteuergeräten LCU₁..LCUₚ der unteren Steuerebene enthalten sein. Radnahe Impulsgeber IG melden hierzu die momentanen Radgeschwindigkeiten an die lokalen Bremssteuergeräte LCU₁..LCUₚ. An den globalen Bremssystem-Datenbus 4 können weitere solcher Module 8 angeschlossen werden, so dass das Bremssystem modular erweiterbar ist.

Die lokalen Bremssystem-Datenbusse 6 sind vorzugsweise CAN (Controller Area Network) - Datenbusse, die Datenübertragung erfolgt vorzugsweise ereignisgetriggert mit einer hohen Busfrequenz, welche in einem Bereich von ca. 500 bis 1000 kBits/s liegt. Die Realisierung der lokalen "Punkt-zu-Punkt-Verbindungen" kann sowohl über entsprechend spezifizierte Kupferdrahtleitungen als auch über Lichtwellenleiter erfolgen. Der globale CAN 4 und die lokalen CAN 6 stellen dann voneinander unabhängige und entkoppelte Bremssystem-Datenbusse dar.

### Bezugszeichenliste

- 1: Kommunikationsstruktur
- 2: Schienenfahrzeug-Datenbus
- 4: globaler Bremssystem-Datenbus
- 6: lokaler Bremssystem-Datenbus
- 8: Modul

- CCU: zentrales Bremssteuergerät einer oberen Steuerebene
- ICU: Bremssteuergerät einer mittleren Steuerebene
- LCU: Bremssteuergerät einer unteren Steuerebene
- IG: Impulsgeber
- LS: Lastsensor

## Patentansprüche

1. Bremssystem für Schienenfahrzeuge, insbesondere für einen aus mehreren Schienenfahrzeugen bestehenden Schienenfahrzeug- verband, mit mehreren elektromechanischen Bremszuspann-einrichtungen, von welchen je eine Bremszuspanneinrichtung von wenigstens einem lokalen Bremssteuergerät angesteuert ist und mit wenigstens einem zentralen Bremssteuergerät, das mit den lokalen Bremssteuergeräten über wenigstens einen Bremssystem-Datenbus kommuniziert, **dadurch gekennzeichnet, dass** wenigstens einer Gruppe von lokalen Bremssteuergeräten (LCU₁..LCUₚ) eines Teils des Schienenfahrzeugs oder eines Teils des Schienenfahrzeugverbandes wie beispielsweise eines Drehgestells oder eines einzelnen Wagens jeweils mindestens ein weiteres, dem zentralen Bremssteuergerät (CCU₁, CCU₂) und den lokalen Bremssteuergeräten (LCU₁..LCUₚ) der Gruppe zwischengeschaltetes Bremssteuergerät (ICU₁..ICUₙ) zugeordnet ist, wobei jedes lokale Bremssteuergerät der Gruppe (LCU₁..LCUₚ) von lokalen Bremssteuergeräten mittels eines separaten, lokalen Bremssystem-Datenbusses (6) mit dem zugeordneten weiteren Bremssteuergerät (ICU₁..ICUₙ) kommuniziert.

2. Bremssystem nach Anspruch 1, **dadurch gekennzeichnet, daß** ein solches weiteres Bremssteuergerät (ICU₁..ICUₙ) zusammen mit den mittels der lokalen Bremssystem-Datenbusse (6) mit ihm kommunizierenden lokalen Bremssteuergeräten (LCU₁..LCUₚ) ein dem betreffenden Teil des Schienenfahrzeugs oder dem betreffenden Teil des Schienenfahrzeugverbandes zugeordnetes Modul (8) bildet, in welchem schnelle Steuer- und Regelfunktionen wie beispielsweise eine Gleitschutzregelung und/oder eine Bremskraftregelung enthalten sind.

3. Bremssystem nach Anspruch 2, **dadurch gekennzeichnet, daß** die Gleitschutzregelung und/oder die Bremskraftregelung im weiteren Bremssteuergerät (ICU₁..ICUₙ) und/oder in den lokalen Bremssteuergeräten (LCU₁..LCUₚ) enthalten ist.

4. Bremssystem nach einem der vorhergehenden Ansprüche, **dadurch gekennzeichnet, daß** die lokalen Bremssystem-Datenbusse (6) vorzugsweise CAN (Controller Area Network)-Busse sind und eine relativ hohe Übertragungsrate zur Realisierung eines Echtzeitverhaltens aufweisen, welche vorzugsweise in einem Bereich von ca. 500 bis 1000 kBits/s liegt.

5. Bremssystem nach einem der vorhergehenden Ansprüche, **dadurch gekennzeichnet, daß** je ein lokaler Bremssystem-Datenbus (6) eine oder mehrere elektrische Leitungen und/oder eine oder mehrere Lichtweilenleiter beinhaltet.

6. Bremssystem nach einem der vorhergehenden Ansprüche, **dadurch gekennzeichnet, daß** wenigstens ein weiteres, redundantes zentrales Steuergerät (CCU₂) vorgesehen ist, wobei die zentralen Bremssteuergeräte (CCU₁, CCU₂) durch einen globalen Bremssystem-Datenbus (4) untereinander und mit fahrzeug- oder fahrzeugverbandbezogenen Sensoren und Aktoren kommunizieren.

7. Bremssystem nach Anspruch 6, **dadurch gekennzeichnet, daß** die zentralen Bremssteuergeräte (CCU₁, CCU₂) mittels des von den lokalen Bremssystem-Datenbussen (6) unabhängigen, globalen Bremssystem-Datenbusses (4) mit den weiteren Bremssteuergeräten (ICU₁..ICUₙ) kommunizieren.

8. Bremssystem nach Anspruch 7, **dadurch gekennzeichnet, daß** der globale Bremssystem-Datenbus (4) einen CAN-Bus mit linearer Busstruktur beinhaltet.

## Claims

1. Brake system for rail vehicles, in particular for a rail vehicle set comprising several rail vehicles, with a plurality of electro-mechanical brake application devices, each brake application device being driven by at least one local brake control unit, and with at least one central brake control unit communicating with the local brake control units via at least one brake system data bus, **characterised in that** at least one further brake control unit (ICU₁ ... ICUₙ) interposed between the central brake control unit (CCU₁, CCU₂) and the local brake control units (LCU₁ ... LCUₚ) of the group is assigned to at least one group of local brake control units (LCU₁ ... LCUₚ) of a part of the rail vehicle or a part of the rail vehicle set, for instance a bogie or an individual coach or wagon, whereby each local brake control unit of the group (LCU₁ ... LCUₚ) of local brake control units communicates with the associated further brake control unit (ICU₁ ... ICUₙ) by means of a separate local brake system data bus (6).

2. Brake system according to claim 1, **characterised in that** such a further brake control unit (ICU₁ ... ICUₙ) forms, together with the local brake control units (LCU₁ ... LCUₚ) communicating therewith by means of the local data buses (6), a module (8) assigned to the relevant part of the rail vehicle or to the relevant part of the rail vehicle set, in which fast open and closed loop functions, such as wheel slide protection and/or braking force regulation, are incorporated.

3. Brake system according to claim 2, **characterised in that** the wheel slide protection and/or the braking force regulation are incorporated in the further brake control unit (ICU₁ ... ICUₙ) and/or in the local brake control units (LCU₁ ... LCUₚ).

4. Brake system according to any of the preceding claims, **characterised in that** the local data buses (6) are preferably CAN (Controller Area Network) buses and have a relatively high transmission rate, preferably lying in the range between approximately 500 to 1000 kBits/s, to obtain real-time behaviour.

5. Brake system according to any of the preceding claims, **characterised in that** each local brake system data bus (6) contains one or more electrical lines and/or one or more optical waveguides.

6. Brake system according to any of the preceding claims, **characterised in that** at least one further, redundant, central control unit (CCU₂) is provided, whereby the central brake control units (CCU₁, CCU₂) communicate with one another and with vehicle or vehicle set sensors and actuators via a global brake system data bus (4).

7. Brake system according to claim 6, **characterised in that** the central brake control units (CCU₁, CCU₂) communicate with the further brake control units (ICU₁ ... ICUₙ) by means of the global brake system data bus (4), which is independent of the local brake system data buses (6).

8. Brake system according to claim 7, **characterised in that** the global brake system data bus (4) incorporates a CAN bus with a linear bus structure.

## Revendications

1. Système de freinage pour des véhicules ferroviaires, notamment pour un convoi de véhicules ferroviaires constitué de plusieurs véhicules ferroviaires, comportant plusieurs dispositifs électromécaniques de serrage de frein, chaque dispositif de serrage de frein étant commandé par au moins un appareil local de commande de frein, et comportant au moins un appareil central de commande de frein, qui communique avec les appareils locaux de commande de frein par l'intermédiaire d'au moins un bus de données de système de frein, **caractérisé en ce qu'**au moins un groupe d'appareils (LCU₁... LCUₚ) locaux de commande de frein d'une partie du véhicule ferroviaire ou d'une partie du convoi de véhicules ferroviaires, comme par exemple d'un bogie ou d'un wagon individuel est associé à au moins un appareil (ICU₁ ...ICU₂) supplémentaire de commande de frein branché entre l'appareil (CCU₁ ...CCU₂) central de commande de frein et les appareils (LCU₁...LCUₚ) locaux de commande de frein du groupe, chaque appareil local de commande de frein du groupe (LCU₁...LCUₚ) des appareils locaux de commande de frein communiquant, au moyen d'un bus (6) distinct, local de données du système de frein, avec l'appareil (ICU₁...ICUₙ) supplémentaire de commande de frein associé.

2. Système de freinage suivant la revendication 1, **caractérisé en ce qu'**un appareil (ICU₁...ICUₙ) supplémentaire de commande frein de ce genre forme, ensemble avec les appareils (LCU₁...LCUₚ) locaux de commande de frein communiquant avec lui au moyen du bus (6) local de données de système de commande de frein, un module (8) associé à une partie concernée du véhicule ferroviaire ou à une partie concernée du convoi de véhicules ferroviaires, dans lesquelles se trouvent des fonctions de régulation et de commande rapides, comme par exemple une régulation d'anti-enrayage et/ou une régulation de la force de freinage.

3. Système de freinage suivant la revendication 2, **caractérisé en ce que** la régulation d'anti-enrayage et/ou la régulation de la force de freinage se trouve dans l'appareil (ICU₁...ICUₙ) supplémentaire et/ou dans les appareils (LCU₁...LCUₚ) locaux de commande de frein.

4. Système de freinage suivant l'une des revendications précédentes, **caractérisé en ce que** les bus (6) locaux de données de système de frein sont de préférence des bus CAN (Controller Area Network) et ont un débit de transmission relativement grand pour la réalisation d'un suivi en temps réel, débit qui est compris de préférence entre 500 et 1000 kBits/seconde.

5. Système de freinage suivant l'une des revendications précédentes, **caractérisé en ce que** chaque bus (6) local de données de système de freinage comporte un ou plusieurs lignes électriques et/ou un ou plusieurs guides d'ondes lumineux.

6. Système de freinage suivant l'une des revendications précédentes, **caractérisé en ce qu'**il est prévu au moins un appareil (CCU₂) central de commande redondant supplémentaire, les appareils (CCU₁, CCU₂) centraux de commande de freinage communiquant les uns avec les autres par l'intermédiaire d'un bus (4) global de données de freinage et avec des capteurs et des actionneurs liés au véhicule ferroviaire ou au convoi de véhicules ferroviaires.

7. Système de freinage suivant la revendication 6, **caractérisé en ce que** les appareils (CCU₁...CCU₂) centraux de commande de freinage communiquent au moyen du bus (4) global de données de système de freinage indépendamment des bus (6) locaux de données de système de freinage avec les appareils (ICU₁...ICUₙ) supplémentaire de commande de freinage.

8. Système de freinage suivant la revendication 7, **caractérisé en ce que** le bus (4) global de système de freinage comporte un bus CAN ayant une structure de bus linéaire.
